# EUROPEAN PATENT SPECIFICATION

(11) **EP 0 575 287 B1**
(45) Date of publication and mention of the grant of the patent: **11.09.1996**
(21) Application number: 93630040.9
(22) Date of filing: 18.05.1993
(51) Int. Cl.: F28F 1/24, F28D 9/00

(54) **Offset cooling coil fin**
Seitlich versetzte Lamelle für Kühlschlange
Ailette offset pour serpentin de réfroidissement

(30) Priority: 28.05.1992 US 889573
(43) Date of publication of application: 22.12.1993
(73) Proprietor: CARRIER CORPORATION, Syracuse New York 13221 (US)
(72) Inventor: Griffin, Charles K., Auburn, New York 13021 (US); McCabe, Michael P., Chittenango, New York 13037-1012 (US)
(74) Representative: Waxweiler, Jean

(56) References cited:
- EP-A- 0 319 451
- DE-A- 3 131 737
- US-A- 4 909 319
- US-A- 5 111 876

## Description

The invention relates generally to air conditioning systems and, more particularly, to a plate fin heat exchanger and method of manufacture.

In large air conditioning systems, commonly referred to as chiller systems, a liquid such as water or brine is circulated through an evaporator or cooler to chill liquid which is then passed through a heat exchanger of an air handler to cool the air that is then passed through the ductwork to cool spaces in the building. A fan in the air handler normally functions to draw the return air through the heat exchanger and discharge it out into the ductwork.

The cooling coil of the air handler is commonly of the plate fin type, wherein the longitudinally stacked plate fins have a plurality of rows of tubes that carry the cooling liquid, and the air is drawn transversely across the rows while giving up heat to the plate fins, which heat is then conducted to the tubes and hence to the cooling liquid. In the process, condensation is formed on the coil, and as it collects it tends to run down the coil and fall to a drain pan from which it can be properly disposed.

It has long been recognized that if the face velocity (i.e. the velocity of the air passing through the coil) is too great, it will tend to carry over the condensate into the fan and into the ductwork. This can result in leaks to the spaces to be cooled and possible corrosion of the ductwork. If, however, the face velocity is maintained at a moderate level, the condensate forming on the plate fins tends to be blown to the trailing edge of the coil where it then runs down the rear face cf the coil to be collected in the drain pan.

In EP-A-0 319 451 there is described a plate fin heat exchanger according to the preamble of claim 1. More specifically, EP-A-0 319 451 discloses a plate fin heat exchanger of the type having a plurality of longitudinally stacked plate fin members with each having a plurality of transversely spaced rows of openings formed therein, and tubes being disposed through successive aligned holes for conducting the flow of coolant therethrough for cooling air as it passes transversely between the plate fin members from a leading edge to a trailing edge thereof, the plate fin leading edges being spaced from the nearest row of openings by one distance and the plate fin trailing edges being spaced for the nearest row of openings by another distance.

A method of manufacturing a plate fin heat exchanger according to the preamble of claim 4 is also known from EP-A-0 319 451.

One of the ways in which the costs associated with the manufacture of cooling coils can be reduced is that of reducing plate fin material and its associated casing material. As the fin and coil size is reduced, the rows of tubes become closer. Since the normal approach for making individual plate fins from a large sheet of material is to cut the material at a point midway between two rows of tube holes, the "close-row" coils also result in less material at both the leading and trailing edges of the plate fins. That is, both the leading edge and the trailing edge will be closer to the tube rows. The Applicants have recognized that as this space is reduced at the trailing edge, there is a greater tendency for the condensate to be blown off the trailing edge and to be carried over into the airstream.

It is therefore an object of the present invention to provide an improved coil structure and method of manufacture, for reduced blow off and carry-over of condensate into the airstream.

This object is achieved by the apparatus and the method invention as claimed in claims 1 and 4.

Briefly, in accordance with the invention, a close-row cooling coil is made such that the distance between the trailing edge of its plate fins and the nearest row of tube openings is greater than the distance between the leading edge and its nearest row of tube openings. This increase in plate fin surface area at the trailing edge enhances the tendency for the condensate to flow down the trailing edge of the coil and into the drain pan rather than being blown off.

According to the method of the invention, when the individual plate fin members are being cut from a sheet of plate fin material, the cutting between rows is made in a plane that is offset from the center of the two rows such that more material is left on one edge than on the other. This edge is placed at the trailing edge of the coil, while the other edge is placed at the leading edge thereof.

In the drawings as hereinafter described, a preferred embodiment is depicted; however, various other modifications and alternate constructions can be made thereto without departing from the true spirit and scope of the invention.

Figure 1 is a perspective view of an air handler including a cooling coil in accordance with the present invention.

Figure 2 is a perspective view of the cooling coil portion thereof.

Figure 3 is a top view of a sheet of plate fin material with cutting lines indicated in accordance with the present invention.

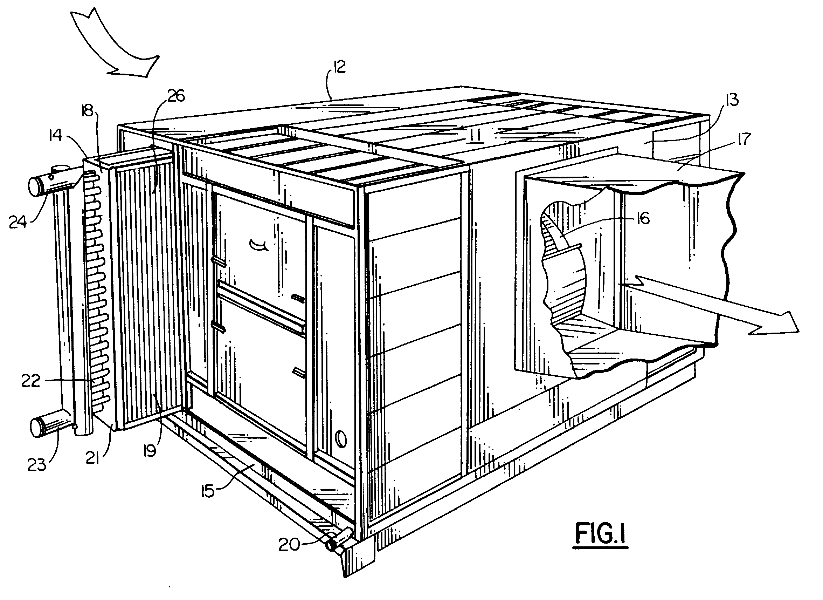

Referring now to Figure 1, there is shown an air handling unit **11** for receiving return air at its inlet end **12** and for discharging cooled air at its discharge end **13**. A cooling coil **14** is provided near the inlet end **12**. A fan **16** draws the return air through the cooling coil **14**, where it is cooled before passing through the fan **16** and into the duct **17** to be distributed to various terminals within the building.

The cooling coil **14**, which is shown in a partially pulled out position, includes a frame **18** containing a plurality of plate fin members **19** stacked longitudinally from one end **21** of the frame **18** to the other (not shown). Passing through aligned openings in the plate fin members **19** are a plurality of tubes **22** to which outlet and inlet headers **23** and **24**, respectively, are fluidly connected. Thus, the chilled water coming from the cooler passes into the inlet header **24** through the tubes **22** and out of the outlet header **23**, to again flow to the cooler to be chilled. As the return air passes transversely over the plate fins **19**, it gives up heat to the plate fins, which in turn conduct the heat to the tubes and finally to the chilled water flowing through the tubes **19**.

Below the cooling coil **14** is a condensate drain pan (not shown), which is fluidly connected to a drain pipe leading to the sewer. As the condensate forms on the plate fin members **19**, it tends to flow, because of the movement of the air through the coil **14**, to the front face **26** of the coil **14**. It then runs down the front face **26** and into the condensate drain pan.

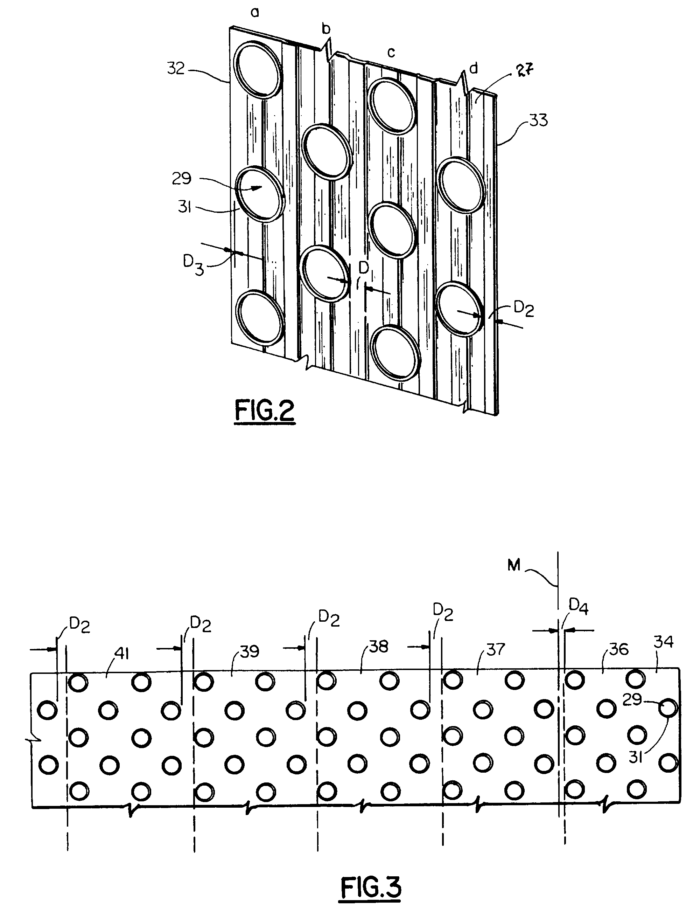

Referring now to Figure 2, an individual plate fin member **27** is shown to include a plurality of rows, "a", "b", "c" and "d" of openings **29** with each opening **29** having a raised collar **31** which is formed by rolling over the raised material after it has been slit. The collars **31** function to provide the desired spacing between the individual plate fin members **27** when they are longitudinally stacked within the coil **14**.

The plate fin member **27** has a leading edge **32** and a trailing edge **33**. When installed in the coil frame **18**, the leading edge **32** is in the plane of the rear face and the trailing edge **33** is in the plane of the front face **26** of the cooling coil **14**. It will thus be recognized that the air passing through the coil will first pass over the leading edge **32**, then flow transversely over the surface of the plate fin members **27** and finally over the trailing edge **33**.

In accordance with the present invention, it is desirable to maximize the surface of the plate fin member between the trailing edge **33** and the last row "d" of openings **29** such that the condensate will tend not to be blown off the trailing edge **33** but will rather collect in that area between the trailing edge **33** and the row "d" of holes, and then run down the coil front face **26** to the condensate drain pan.

As will be seen in Figure 2, the distance between adjacent rows of openings **29** is indicated by the dimension D₁. The distance between the last row "d" of openings **29** and the trailing edge **33** of the plate fin member **27** is indicated by the dimension D₂, and that between row "a" of openings **29** and the leading edge **32** is indicated by the dimension D₃. It will be seen that the dimension D₂ is substantially greater than the dimension D₃, and it is preferred that the dimension D₂ is substantially equal to the dimension D₁ and that the dimension D₃ approaches zero. For example, typical dimensions for a close-row, 1.27 cm (half inch) nominal diameter tube, cooling coil plate fin member are:
D₁ = 1.98 cm (.781 inches), D₂ = 0.56 cm (.219 inches) and D₃ = 0.16 cm (.062 inches).

Referring now to Figure 3, there is shown a sheet of plate fin material **34** with the openings **29** and collars **31** formed therein. Assuming that a four-row coil is being produced, the sheet **34** will be cut into four-row sections **36, 37, 38, 39, 41** etc. As will be seen, the locations of the cut lines, as indicated by the dashed lines, is offset by a distance D₄ from a central plate M intermediate the two rows. The distance D₂ between the leading edge and the adjacent row of openings for each of the individual plate fin members **36, 37, 38, 39**, etc. will then be maximized such that when the individual plate members **36, 37**, etc. are assembled into the cooling coil **14**, the problem of carry-over as described hereinabove will be avoided.

## Claims

1. A plate fin heat exchanger of the type having
a plurality of longitudinally stacked plate fin members (19, 27) with each having a plurality of transversely spaced rows (a,b,c,d) of openings (29) formed therein, and
tubes (22) being disposed through successive aligned holes for conducting the flow of coolant therethrough for cooling air as it passes transversely between the plate fin members (19,27) from a leading edge (32) to a trailing edge (33) thereof,
the plate fin leading edges (32) being spaced from the nearest row (a) of openings (29) by one distance (D3), and
the plate fin trailing edges (33) being spaced from the nearest row (d) of openings (29) by another distance (D2),
characterized in that said another distance (D2) is substantially greater than said one distance (D3), such that there is sufficient plate fin surface area near the trailing edge (33) such that condensate residing thereon will tend to run down successive plate fin trailing edges (33) rather than being blown off by the flow of air.

2. A plate fin heat exchanger as set forth in claim 1, characterized in that said other distance (D2) is substantially equal to the distance (D1) between adjacent rows (a,b,c,d).

3. A plate fin heat exchanger as set forth in claim 1, characterized in that the plate fin members (19,27) include raised collars (31) around each of the formed openings (29).

4. A method of manufacturing a plate fin heat exchanger coil of the type having a plurality of longitudinally stacked plate fin members (19,27) with each having a plurality of transversely spaced rows (a,b,c,d) of openings (29) formed therein, and tubes (22) being disposed through successive aligned openings (29) to conduct the flow of coolant therethrough for cooling air as it passes transversely between the plate fins (19,27) from a leading edge (32) to a trailing edge (33) thereof,
said method comprising the steps of:
forming a sheet of plate fin material (34) with rows (a,b,c,d) of openings (29) formed therein, said sheet (34) being of a size to include substantially more rows (a,b,c,d) of openings (29) than are required for a single plate fin member (27) of a heat exchanger;
cutting said sheet (34) into a plurality of plate fin members (36-39) with each having the number of rows (a,b,c,d) of openings (29) as desired for the heat exchanger coil;
characterized by said cuttings being made substantially closer to one row than to the other so as to obtain plate fin members (19,27) having one edge (33) that is spaced a substantially greater transverse distance (D2) from its nearest row (d) of openings (29) than the other edge (32) is spaced (D3) from its nearest row (a) of openings (29), and
assembling said plate fin members (19,27) in stacked relationship with said one edge being at the trailing edge (33) and said other edge being at the leading edge (32), such that there is sufficient plate fin surface area near the trailing edge (33) that condensate residing thereon will tend to run down successive plate fin member's trailing edges (33) rather than being blow off by the flow of air.

5. A method as set forth in claim 4, characterized in that, during said cutting step, the distance (D2) said one edge (33) is spaced from its nearest row (d) of holes is substantially equal to the distance (D1) between adjacent rows (a,b,c,d).

## Patentansprüche

1. Wärmetauscher mit lamellenförmigen Rippen des Typs, der eine Vielzahl von längs gestapelten lamellenförmige Rippenglieder (19, 27) hat, wobei jedes eine Vielzahl von quer mit einem Zwischenraum angeordneten Reihen (a, b, c, d) von Öffnungen (29) hat, die darin gebildet sind, und
Röhren (22), die durch aufeinanderfolgende ausgerichtete Löcher hindurch angeordnet sind, um die Strömung des Kühlmittels durch sie hindurch zu leiten, um die Luft zu kühlen, wenn sie quer zwischen den lamellenförmige Rippengliedern (19, 27) von einem vorderen Rand (32) zu einem hinteren Rand (33) von ihnen hindurch geht,
wobei die vorderen Ränder (32) der lamellenförmigen Rippen von der nächstliegenden Reihe (a) von Öffnungen (29) mit einer Distanz (D3) angeordnet sind, und
die hinteren Ränder (33) der lamellenförmigen Rippen von der nächstliegenden Reihe (d) von Öffnungen (29) mit einer anderen Distanz (D2) angeordnet sind,
dadurch gekennzeichnet, dass die andere Distanz (D2) wesentlich grösser als die eine Distanz (D3) ist, damit es eine ausreichende Oberfläche der lamellenförmigen Rippe nahe beim hinteren Rand (33) gibt, so dass Kondensat, das sich darauf befindet, dazu neigen wird, eher entlang von hinteren Rändern (33) von aufeinanderfolgenden lamellenförmigen Rippen nach unten zu fliessen als durch die Strömung der Luft weggeblasen zu werden.

2. Wärmetauscher mit lamellenförmigen Rippen nach Anspruch 1, dadurch gekennzeichnet, dass die andere Distanz (D2) im wesentlichen gleich gross ist wie die Distanz (D1) zwischen benachbarten Reihen (a, b, c, d).

3. Wärmetauscher mit lamellenförmigen Rippen nach Anspruch 1, dadurch gekennzeichnet, dass die lamellenförmigen Rippenglieder (19, 27) erhöhte Schultern (31) um jede der gebildeten Öffnungen (29) herum umfassen.

4. Verfahren für die Herstellung einer Wärmetauscher-Kühlschlange des Typs, der eine Vielzahl von längs gestapelten lamellenförmige Rippenglieder (19, 27) hat, wobei jedes eine Vielzahl von quer mit einem Zwischenraum angeordneten Reihen (a, b, c, d) von Öffnungen (29) hat, die darin gebildet sind, und Röhren (22), die durch aufeinanderfolgende ausgerichtete Öffnungen (29) hindurch angeordnet sind, um die Strömung des Kühlmittels durch sie hindurch zu leiten, um die Luft zu kühlen, wenn sie quer zwischen den lamellenförmige Rippengliedern (19, 27) von einem vorderen Rand (32) zu einem hinteren Rand (33) von ihnen hindurch geht,
wobei das Verfahren die Schritte umfasst:
ein Blatt (34) aus dem Material für die lamellenförmigen Rippen zu bilden, wobei Reihen (a, b, c, d) von Öffnungen (29) darin ausgebildet sind, wobei das Blatt (34) eine Grösse hat, um wesentlich mehr Reihen (a, b, c, d) von Öffnungen (29) zu enthalten, als für ein einziges lamellenförmiges Rippenglied (27) eines Wärmetauschers nötig wäre;
dieses Blatt (34) in eine Vielzahl von lamellenförmigen Rippenglieder (36 - 39) zu zerschneiden, wobei jedes die Anzahl Reihen (a, b, c, d) von Öffnungen (29) hat, wie sie für die Wärmetauscher-Kühlschlange gewünscht wird;
dadurch gekennzeichnet, dass diese Schnitte wesentlich näher bei einer Reihe als bei der anderen gemacht werden, um lamellenförmige Rippenglieder (19, 27) zu erhalten, die einen Rand (33) haben, der in einer wesentlich grösseren Querdistanz (D2) von seiner nächstliegenden Reihe (d) von Löchern (29) angeordnet ist als der andere Rand (32) von seiner nächstliegenden Reihe (a) von Öffnungen (29) distanziert (D3) angeordnet ist, und
die lamellenförmigen Rippenglieder (19, 27) in einer gestapelten Beziehung zu montieren, wobei der eine Rand am vorderen Rand (33) liegt und der andere Rand am hinteren Rand (32) liegt, damit es eine ausreichende Oberfläche der lamellenförmigen Rippe nahe beim hinteren Rand (33) gibt, dass Kondensat, das sich darauf befindet, dazu neigen wird, eher entlang von hinteren Rändern (33) von aufeinanderfolgenden lamellenförmigen Rippengliedern nach unten zu fliessen als durch die Strömung der Luft weggeblasen zu werden.

5. Verfahren nach Anspruch 4, dadurch gekennzeichnet, dass, während dem Schritt des Schneidens, die Distanz (D2), um die entfernt der eine Rand (33) von seiner nächstliegenden Reihe (d) von Löchern angeordnet ist, im wesentlichen gleich gross ist wie die Distanz (D1) zwischen benachbarten Reihen (a, b, c, d).

## Revendications

1. Un échangeur de chaleur à ailettes plates du type ayant
une pluralité d'ailettes plates empilées longitudinalement (19, 27), chacune ayant une pluralité de rangées espacées transversalement (a,b,c,d) d'ouvertures (29) formées en elle, et
des tubes (22) étant disposés à travers les trous alignés successifs pour conduire le flux de réfrigérant au travers, pour refroidir l'air tandis qu'il passe transversalement entre les ailettes plates (19, 27) à partir d'un bord d'attaque (32) jusqu'à un bord traînant (33) de ces dernières,
les bords d'attaque des ailettes plates (32) étant espacés de la rangée la plus proche (a) des ouvertures (29) d'une distance (D3), et
les bords traînants des ailettes plates (33) étant espacés de la rangée la plus proche (d) des ouvertures (29) d'une autre distance (D2),
caractérisé en ce que ladite autre distance (D2) est essentiellement plus grande que ladite première distance (D3) de sorte qu'il y a une aire de surface des ailettes plates suffisante près du bord traînant (33) de sorte que l'eau de condensation résidant sur cette dernière tendra à descendre le long des bords traînants des ailettes plates successives (33) plutôt que d'être emportée par le flux d'air.

2. Un échangeur de chaleur à ailettes plates tel qu'exposé dans la revendication 1, caractérisé en ce que ladite autre distance (D2) est essentiellement égale à la distance (D1) entre des rangées adjacentes (a,b,c,d).

3. Un échangeur de chaleur à ailettes plates tel qu'exposé dans la revendication 1, caractérisé en ce que les ailettes plates (19, 27) comprennent des bagues surélevées (31) autour de chacune des ouvertures formées (29).

4. Un procédé de fabrication d'une bobine échangeuse de chaleur à ailettes plates du type ayant une pluralité d'ailettes plates empilées longitudinalement (19, 27), chacune ayant une pluralité de rangées espacées transversalement (a,b,c,d) d'ouvertures (29) formées en elle, et des tubes (22) étant disposés à travers les ouvertures alignées successives (29) pour conduire le flux de réfrigérant au travers pour refroidir l'air tandis qu'il passe transversalement entre les ailettes plates (19, 27) à partir d'un bord d'attaque (32) jusqu'à un bord traînant (33) de ces dernières,
ledit procédé comprenant les étapes de:
former une feuille en un matériau pour ailette plate (34) avec des rangées (a,b,c,d) d'ouvertures (29) formées, ladite feuille (34) étant d'une taille permettant de comprendre essentiellement plus de rangées (a,b,c,d) d'ouvertures (29) que ce qui est requis pour une ailette plate unique (27) d'un échangeur de chaleur;
couper ladite feuille (34) en une pluralité d'ailettes plates (36-39), chacune ayant le nombre de rangées (a,b,c,d) d'ouvertures (29) tel que souhaité pour la bobine échangeuse de chaleur;
caractérisé par lesdits découpages qui sont faits essentiellement plus près d'une rangée que de l'autre de façon à obtenir des ailettes plates (19, 27) ayant un bord (33) qui est espacé d'une distance transversale (D2) essentiellement plus grande, à partir de sa rangée la plus proche (d) d'ouvertures (29), que l'autre bord (32) n'est espacé (D3) de sa rangée la plus proche (a) d'ouvertures (29), et
l'assemblage desdites ailettes plates (19,27) dans une relation empilée, ledit premier bord étant au niveau du bord traînant (33) et ledit autre bord étant au niveau du bord d'attaque (32), de sorte qu'il existe une aire de surface des ailettes plates suffisante près du bord traînant (33) de sorte que l'eau de condensation résidant sur cette dernière tendra à descendre le long des bords traînants des ailettes plates successives (33) plutôt que d'être emportée par le flux d'air.

5. Un procédé tel qu'exposé à la revendication 4, caractérisé en ce que, durant ladite étape de découpage, la distance (D2) de laquelle ledit premier bord (33) est espacé de sa rangée la plus proche (d) de trous est essentiellement égale à la distance (D1) entre des rangées adjacentes (a,b,c,d).
